# EUROPÄISCHE PATENTSCHRIFT

(11) **EP 2 527 894 B1**
(45) Veröffentlichungstag und Bekanntmachung des Hinweises auf die Patenterteilung: **06.07.2016**
(21) Anmeldenummer: 12003589.4
(22) Anmeldetag: 08.05.2012
(51) Int. Cl.: G02B 6/38, G02B 6/00

(54) **Kupplung sowie Kupplungsvorrichtung**
Plug and associated socket
Connecteur et dispositif de connexion

(30) Priorität: 24.05.2011 DE 102011076315
(43) Veröffentlichungstag der Anmeldung: 28.11.2012
(73) Patentinhaber: Karl Storz GmbH & Co. KG, 78532 Tuttlingen (DE)
(72) Erfinder: Leidolt, Christoph, 78224 Singen (DE)

(56) Entgegenhaltungen:
- EP-A1- 0 599 780
- WO-A1-2010/081765
- US-A- 4 747 656

## Beschreibung

Die vorliegende Erfindung betrifft eine Kupplung zum lösbaren Verbinden eines Lichtleiters mit einem Kupplungsgegenstück nach dem Oberbegriff von Anspruch 1 sowie eine Kupplungsvorrichtung mit einer Kupplung und einem Kupplungsgegenstück.

Kupplungen zum lösbaren Verbinden eines Lichtleiters mit einem Kupplungsgegenstück sind bekannt. So sind beispielsweise Kupplungen zum Verbinden eines Lichtleitkabels mit einem Kupplungsgegenstück, das als Lichtanschluss eines Endoskops ausgebildet ist, bekannt. Dabei wird Beleuchtungslicht in einer vom Endoskop separaten Lichtquelle erzeugt und in einen Lichtleiter, der aus einer Vielzahl von Lichtleitfasern bestehen kann, eingekoppelt. Der Lichtleiter ist Teil eines Lichtleitkabels, das an die Lichtquelle und an ein Endoskop anschließbar ist und hierfür eine Kupplung aufweist. Das Lichtleitkabel kann an den Lichtanschluss des Endoskops angeschlossen werden, um das Beleuchtungslicht in einen weiteren Lichtleiter einzukoppeln, der innerhalb des Endoskops angeordnet ist, um das Beleuchtungslicht zu einem zu beobachtenden Objektfeld, das in der Regel ein körperinnerer Hohlraum ist, weiterzuleiten. Sowohl der Lichtleiter des Lichtleitkabels als auch der innerhalb des Endoskops weisen hierfür üblicherweise plane Endflächen auf, die zur Übertragung des Beleuchtungslichts miteinander in Anlage oder in eine Gegenüberstellung gebracht werden, wobei auch ein Luftspalt zwischen den Endflächen verbleiben kann.

Beim Einsatz des Endoskops ist es notwendig, eine sichere Verbindung zwischen dem Lichtleitkabel und dem Endoskop herzustellen. Beim unbeabsichtigten Lösen der Verbindung ist nicht nur die endoskopische Beobachtung des körperinneren Hohlraums unterbrochen, sondern das sehr helle Beleuchtungslicht kann bei einer unkontrollierten Bewegung des freien Endes des Lichtleitkabels zu Verbrennungen führen. Da bei einer endoskopischen Operation beides zu nachteiligen oder sogar gefähzlichen Situationen führen kann, ist es wichtig, ein unbeabsichtigtes Lösen der Verbindung zu vermeiden. Andererseits soll die Verbindung des Lichtleitkabels mit dem Endoskop stets rasch und einfach geschlossen und wieder gelöst werden können, damit auch in einer Operationssituation ein schnelles und sicheres Herstellen und Lösen der Verbindung möglich ist, ohne eine allzu hohe Aufmerksamkeit von einer Bedienperson zu erfordern. Es ist daher insbesondere bei medizinischen Anwendungen notwendig, ein einfaches und sicheres Verbinden und Trennen eines Lichtleiters von einem Gegenstück zu ermöglichen.

Es sind deshalb Kupplungen mit einer Rastverbindung entwickelt worden, bei denen ein unbeabsichtigtes Lösen einer Verbindung eines Lichtleiters von einem Lichtanschluss vermieden werden soll. Aus DE 93 14 172 U1 ist ein Lichtwellenleiter-Stecker bekannt, bei dem eine Griffhülse axial verschiebbar gegenüber einem Steckerkörper angeordnet ist, in welchem ein Steckerstift, der eine LWL-Faser umschließt, verdrehgesichert, jedoch axial verschieblich geführt ist. Zur Erhöhung der Auszugsfestigkeit des Steckers sind Rastkrallen vorgesehen, die in eine Umfangsnut einer Kupplungshülse eingreifen. Durch axiales Verschieben der Griffhülse kann eine Aushebevorrichtung zum Ausheben der Rastkrallen und zum einfachen Ziehen des Steckers betätigt werden. Gemäß DE 10 2004 009 218 B4 ist bei einer Kupplungsverbindung eines Lichtleiteranschlusskabels mit einer Endoskopoptik eine Rasteinrichtung vorgesehen, wobei ein radial bewegbarer Sperrkörper in eine Vertiefung auf dem Umfang eines Anschlussstutzens eingreift. Eine längsverschiebbar gelagerte Griffhülse trägt einen nach innen ragenden Nocken, der in Ruhestellung der Griffhülse den Sperrkörper in Sperrstellung hält. Durch Verschieben der Griffhülse in Längsrichtung wird der Sperrkörper freigegeben, so dass das Lichtleiteranschlusskabel aufgesteckt bzw. abgezogen werden kann.

In US 4,747,656 ist eine Kupplungskonfiguration für einen optischen Verbinder offenbart, wobei der Verbinder elastische Riegelsegmente aufweist, die nach innen gerichtete Riegelabschnitte tragen. Ferner weist der Verbinder ein Druckteil auf, das die elastischen Riegelsegmente außen umgreift, und das auf seiner Innenseite Druckbereiche trägt, die mit den Riegelabschnitten derart zusammenwirken, dass diese durch Drehen des Druckteils nach innen gedrückt werden können. Beim Verbinden des Verbinders mit einer Aufnahme einer Lichtquelle gleiten die Riegelabschnitte auf der Außenseite eines Stutzens. Zum Verriegeln des Verbinders wird das Druckteil gedreht, so dass die Druckbereiche über ihre Anlaufschrägen die Riegelabschnitte nach innen drücken, wodurch die Riegelabschnitte in Eingriff hinter einem gestuften Abschnitt des Stutzens gehalten werden. Zum Lösen der Verbindung wird das Druckteil derart gedreht, dass die Druckbereiche die Riegelabschnitte freigeben. Danach kann der Verbinder vom Stutzen abgezogen werden, wodurch die Riegelabschnitte aus dem Eingriff hinter dem gestuften Abschnitt ausgehoben werden.

Es ist Aufgabe der vorliegenden Erfindung, eine einfach handhabbare Kupplung zum lösbaren Verbinden eines Lichtleiters mit einem Kupplungsgegenstück sowie eine Kupplungsvorrichtung anzugeben, wobei gleichzeitig eine erhöhte Sicherheit gegen unbeabsichtigtes Lösen der Verbindung erreichbar ist.

Diese Aufgabe wird durch eine Kupplung gemäß Anspruch 1 sowie durch eine Kupplungsvorrichtung gemäß Anspruch 8 gelöst.

Vorteilhafte Weiterbildungen der Erfindung ergeben sich aus den Unteransprüchen.

Eine erfindungsgemäße Kupplung zum lösbaren Verbinden eines Lichtleiters mit einem Kupplungsgegenstück umfasst einen Kupplungskörper, der mit einer im Wesentlichen hülsenförmigen Lichtleiterfassung verbunden ist. Die Lichtleiterfassung ist zum Fassen eines Endbereichs eines Lichtleiters ausgebildet, der eine plane Endfläche bilden kann, die beim Schließen der Kupplung in Anlage mit oder in Gegenüberstellung zu einer entsprechenden planen Endfläche eines weiteren Lichtleiters angeordnet werden kann. Der weitere Lichtleiter ist dem Kupplungsgegenstück zugeordnet. Auch der Kupplungskörper kann hülsenoder zylinderförmig ausgebildet sein, wobei eine Längsachse des Kupplungskörpers und der Lichtleiterfassung durch die Längsachse des Endbereichs des Lichtleiters definiert ist.

Weiterhin umfasst eine erfindungsgemäße Kupplung eine Griffhülse, die den Kupplungskörper zumindest abschnittsweise umfangsseitig umgibt. Da der Kupplungskörper die Lichtleiterfassung umfangsseitig umgeben kann, ist die Griffhülse insbesondere derart ausgebildet, dass im Inneren der Griffhülse der Kupplungskörper oder ein Teil desselben und die Lichtleiterfassung oder ein Teil derselben angeordnet sind. Die Griffhülse ist zum Ergreifen durch eine Bedienperson ausgebildet und kann hierfür beispielsweise außenseitig mit Griffrillen oder Abflachungen versehen sein.

Ferner umfasst die erfindungsgemäße Kupplung mindestens eine Rastkralle, die an dem Kupplungskörper in radialer Richtung federnd beweglich gehalten ist. Die Rastkralle ist zum Rasteingriffhinter mindestens einen Rastvorsprung des Kupplungsgegenstücks ausgebildet. Hierfür ist die Rastkralle in axialer und in radialer Richtung derart angeordnet, dass beim Verbinden eines in der Lichtleiterfassung gehaltenen Lichtleiters mit dem Kupplungsgegenstück die Rastkralle zum Eingriff hinter den Rastvorsprung gelangt. Wird beispielsweise zum Verbinden das Kupplungsgegenstück oder ein Teil desselben in den Kupplungskörper eingeschoben, so ist die Rastkralle nach dem Einschieben im Bereich des Rastvorsprungs angeordnet und durch eine Federkraft zum Eingreifen hinter den Rastvorsprung vorgespannt. Die Rastkralle wird somit durch die Federkraft im Eingriff hinter dem Rastvorsprung gehalten.

Erfindungsgemäß ist die Griffhülse auf dem Kupplungskörper drehbar gelagert, wobei durch eine Drehbewegung der Griffhülse relativ zum Kupplungskörper die mindestens eine Rastkralle aus dem Rasteingriff hinter den Rastvorsprung aushebbar ist. Während bei der Benutzung der Kupplung häufig Kräfte in axialer Richtung wirken und in der Regel zum Auseinanderziehen von Kupplung und Kupplungsgegenstück notwendig sind, ist somit zum Trennen der Verbindung zusätzlich eine Drehung der Griffhülse um die Längsachse erforderlich. Während ein Herstellen und ein Lösen der Verbindung durch sehr einfache Handgriffe möglich ist, wird eine zusätzliche Sicherheit gegen ein unbeabsichtigtes Lösen dadurch gewonnen, dass zum Lösen der Verbindung zwei völlig unterschiedliche Bewegungen erforderlich sind, nämlich eine Drehbewegung zum Lösen der Rastkralle und eine axiale Bewegung zum Auseinanderziehen von Kupplung und Kupplungsgegenstück.

Gemäß einer bevorzugten Ausführungsform der Erfindung weist die mindestens eine Rastkralle in Umfangsrichtung eine Anlaufschräge und die Griffhülse mindestens einen Steuernocken auf, der bei der Drehbewegung der Griffhülse mit der Anlaufschräge zum Ausheben der Rastkralle zusammenwirkt. Als Steuernocken kann beispielsweise ein Bolzen dienen, der an einem mit der Griffhülse an ihrer Innenseite verbundenen Ring oder an einem Ringsegment bzw. einem Vorsprung befestigt ist und von diesem in axialer Richtung absteht. Gelangt der Bolzen bei einer Drehung der Griffhülse um die Längsachse in Eingriff mit der in Umfangsrichtung gerichteten Anlaufschräge der Rastkralle, so wird diese entgegen der Federvorspannung angehoben und bei weiterer Drehung der Griffhülse schließlich aus dem Rasteingriff ausgehoben. Hierdurch kann auf besonders einfache und sichere Weise ein Ausheben der Rastkralle aus dem Rasteingriff hinter den Rastvorsprung durch eine Drehbewegung der Griffhülse gesteuert werden.

Während prinzipiell eine Rastkrallc und ein Steuernocken zur Erzielung der erfmdungsgemäßen Vortcile ausreichend sind, ist es bevorzugt, dass eine Mehrzahl von Rastkrallen und Steuernocken vorhanden ist, insbesondere zwei Rastkrallen mit jeweils einem Steuemocken. Hierdurch wird eine noch sicherere Verbindung der Kupplung und damit eines von der Lichtleitcrfassung gefassten Lichtleiters mit dem Kupplungsgegenstück ermöglicht.

Gemäß einer bevorzugten Ausführungsform der Erfindung ist die mindestens eine Rastkralle innenseitig mit einer Fase bzw. Anschrägung versehen, so dass die Rastkralle beim Zusammenführen von Kupplung und Kupplungsgegenstück automatisch in radialer Richtung angehoben und über den Rastvorsprung geführt wird. Hierdurch wird das Herstellen einer Verbindung von Kupplung und Kupplungsgegenstück erleichtert.

Weiterhin ist es bevorzugt, dass die Kupplung eine axiale Führung des Kupplungsgegenstücks aufweist. So kann etwa eine Außenseite eines Abschnitts der Lichtleiterfassung bzw. des Kupplungskörpers mit einer Bohrung des Kupplungsgegenstücks zusammenwirken, um beim Herstellen der Verbindung durch Zusammenschieben von Kupplung und Kupplungsgegenstück eine gegenseitige Führung zu gewährleisten. Hierdurch wird eine genauere Ausrichtung der Rastkralle der Kupplung zu den Rastvorsprüngen des Kupplungsgegenstücks und ggf. einer Endfläche des in der Lichtleiterfässung gefassten Lichtleiters zu einer korrespondierenden Endfläche eines dem Kupplungsgegenstück zugeordneten Lichtleiters ermöglicht Auf diese Weise kann sowohl eine weiter verbesserte mechanische Verbindung als auch eine verbesserte optische Verbindung zur Lichtübertragung erzielt werden.

Erfindungsgemäß weist der Kupplungskörper ein Gewinde auf, das zum Zusammenwirken mit einem Gewinde des Kupplungsgegenstücks ausgebildet ist und dadurch eine zusätzliche Verbindung der Kupplung mit dem Kupplungsgegenstück ermöglicht. So kann beispielsweise am Kupplungskörper in einem Bereich, in den zum Herstellen der Verbindung ein zylindrischer Stutzen des Kupplungsgegenstücks eingeschoben wird, ein Innengewinde angeordnet sein, das mit einem Außengewinde des zylindrischen Stutzens zusammenwirkt. Die Verbindung zwischen Kupplung und Kupplungsgegenstück wird somit durch eine Drehbewegung unter gleichzeitiger axialer Bewegung hergestellt. Die mechanische Verbindung ist somit noch sicherer und fester und zusätzlich gegen eine Verkippung der Längsachse des Lichtleiters gegenüber einer Längsachse eines dem Kupplungsgegenstück zugeordneten weiteren Lichtleiters gesichert. Es kann auch eine Anschlagfläche vorgesehen sein, gegen die ein Festziehen der Kupplung gegenüber dem Kupplungsgegenstück erfolgen kann, um die Verbindung weiter zu stabilisieren. Die mindestens eine Rastkralle kann im Verhältnis zu dem mindestens einen Rastvorsprung derart angeordnet sein, dass der Rasteingriff dann erfolgt, wenn beide Gewinde nahezu vollständig oder zu einem für die Verbindung der Gewinde ausreichenden Teil ineinander eingreifen. Hierdurch wird eine besonders wirksame und einfach herstellbare und bedienbare Sicherung der Verbindung erzielt.

Insbesondere ist das Gewinde in vorteilhafter Weise als 3-Gang-Gewinde ausgebildet. Ein solches Gewinde vereinfacht das Ansetzen der Kupplung an das Kupplungsgegenstück zum Herstellen der Verbindung durch Zusammenwirken der Gewinde. Weiterhin ist es vorteilhaft, dass das Gewinde kurz ausgebildet ist, so dass die Verbindung beispielsweise bereits durch eine halbe Umdrehung geschlossen werden kann, was die Bedienung vereinfacht. Das Gewinde kann ferner mit einer gewissen Reibung ausgebildet sein, um die Sicherheit und Bedienbarkeit weiter zu verbessern.

Erfindungsgemäß ist die Drehbewegung der Griffhülse relativ zum Kupplungskörper begrenzt, insbesondere in beiden Drehrichtungen. Es kann dann zur Handhabung der Kupplung und ggf. eines mit dieser versehenen Lichtleitkabels ausreichen, diese bzw. dieses an der Griffhülse zu ergreifen.

Ist die Kupplung mit einem Gewinde versehen, so ist die Drehbewegung der Griffhülse relativ zum Kupplungskörper insbesondere in einer Schließrichtung des Gewindes durch einen Anschlag begrenzt Hierdurch kann die Drehbewegung zum Verbinden des Gewindes mit einem Gewinde des Kupplungsgegenstücks alleine durch Ergreifen der Griffhülse ausgeführt werden, da beim Erreichen des Anschlags der Kupplungskörper mit einer Drehung der Griffhülse mitgenommen wird. Auch ein Festziehen des Gewindes zum noch festeren Verbinden von Kupplung und Kupplungsgegenstück ist auf diese Weise möglich.

Die Drehbewegung der Griffhülse relativ zum Kupplungskörper ist in Öffnungsrichtung des Gewindes in vorteilhafter Weise ebenfalls begrenzt, insbesondere durch einen Anschlag, der auch beispielsweise durch das Zusammenwirken des mindestens einen Steuernocken mit der mindestens einen Anlaufschräge gebildet werden kann. Hierdurch wird der besondere Vorteil erzielt, dass ein Lösen der Verbindung durch eine Drehung der Griffhülse in Öffnungsrichtung bis zum Ausheben der mindestens einen Rastkralle aus dem Rasteingriff und durch eine Drehung der Griffhülse in derselben Richtung zum Lösen des Gewindeeingriffs erfolgt. So kann beispielsweise ein Bewegungsbereich von ca. 10° zwischen Griffhülse und Kupplungskörper vorgesehen sein, der für ein Anheben der Rastkralle ausreichend sein kann. Durch eine weitere Drehung in der gleichen Richtung um beispielsweise ca. 180° können dann die Gewinde voneinander getrennt werden. Durch eine durchgehende Drehbewegung kann somit ein Lösen sowohl der Rastverbindung wie auch der Schraubverbindung erfolgen. Hierdurch wird eine besonders einfache Handhabung ermögleicht- Zum vollständigen Trennen von Kupplung bzw. Lichtleiter und Kupplungsgegenstück kann eine zusätzliche axiale Bewegung erforderlich sein.

In bevorzugter Weise ist der Kupplungskörper mit der Lichtleiterfassung drehbar verbunden, wodurch eine besonders einfache Handhabung und eine zusätzliche Sicherheit gegen unbeabsichtigtes Lösen erzielt wird. Der Kupplungskörper kann aber auch fest mit der Lichtleiterfassung verbunden sein oder mit dieser einstückig ausgebildet sein. Ferner kann die mindestens eine Rastkralle als axialer Vorsprung des Kupplungskörpers ausgebildet sein.

Eine erfindungsgemäße Kupplungsvorrichtung umfasst eine Kupplung wie vorstehend beschrieben und ein Kupplungsgegenstück, wobei das Kupplungsgegenstück mindestens einen Rastvorsprung für einen Rasteingriff der mindestens einen Rastkralle aufweist.

Der Rastvorsprung kann sowohl durch eine Erhöhung auf einer Außenseite des Kupplungsgegenstücks wie durch eine entsprechende Vertiefung gebildet werden. Gemäß einer bevorzugten Ausführungsform der Kupplungsvorrichtung wird der Rastvorsprung durch einen umlaufenden Bund eines in die Kupplung, insbesondere in den Kupplungskörper der Kupplung, einfuhrbaren Kupplungsstutzens des Kupplungsgegenstücks gebildet. Ein solcher umlaufender Bund kann auch durch den Rand einer umlaufenden Nut gebildet werden. Die mindestens eine Rastkralle ist bevorzugt zum Überwinden des Bunds bei einer axialen Bewegung beim Verbinden der Kupplungsvorrichtung ausgebildet. Der Kupplungsstutzen ist insbesondere zylindrisch ausgebildet. Hierdurch wird eine besonders einfache Herstellung der Kupplungsvorrichtung ermöglicht. Ferner ermöglicht ein umlaufender Bund einen Rasteingriff unabhängig von einer Drehposition der Kupplung relativ zum Kupplungsgegenstück. Der Rastvorsprung kann ausreichend steil oder sogar mit einer Hinterschneidung ausgebildet sein, so dass eine in axialer Richtung wirkende Kraft nicht zu einem Lösen der Verbindung fuhren kann.

In bevorzugter Weise ist die Kupplung als Teil eines Lichtleitkabels und das Kupplungsgegenstück als Lichtanschluss eines Endoskops ausgebildet. Das Endoskop kann, je nach vorgesehener Anwendung, starr, halbstarr oder flexibel ausgebildet sein. Der Lichtanschluss und das Lichtleitkabel können weitere optische oder mechanische Elemente umfassen. Eine erfindungsgemäße Kupplungsvorrichtung sowie ein mit einer erfindungsgemä-Ben Kupplung ausgestattetes Lichtleitkabel ermöglichen eine besonders sichere und dennoch durch einfache Handgriffe herstellbare und lösbare Verbindung des Lichtleitkabels mit dem Endoskop. Insbesondere kann ein unbeabsichtigtes Lösen besonders sicher vermieden werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung eines bevorzugten Ausführungsbeispiels und der beigefügten Zeichnung. Der Übersichtlichkeit halber sind nicht in allen Figuren alle Bezugszeichen dargestellt. Es zeigen:
Fig. 1a bis 1c ein erstes Ausführungsbeispiel einer erfindungsgemäßen Kupplungsvorrichtung in vereinfachter Darstellung im Längs- und Querschnitt;
Fig. 2 ein zweites Ausführungsbeispiel einer erfindungsgemäßen Kupplungsvorrichtung in perspektivischer Darstellung als Explosionszeichnung;
Fig. 3a und 3b die Kupplungsvorrichtung der Fig. 2 im Längsschnitt in zwei um 90° zueinander gedrehten Längsebenen;
Fig. 4 die Kupplungsvorrichtung der Fig. 2 im Querschnitt;
Fig. 5 eine Rastkralle in vergrößerter perspektivischer Darstellung;
Fig. 6 ein Ausführungsbeispiel einer Griffhülse im Längsschnitt.

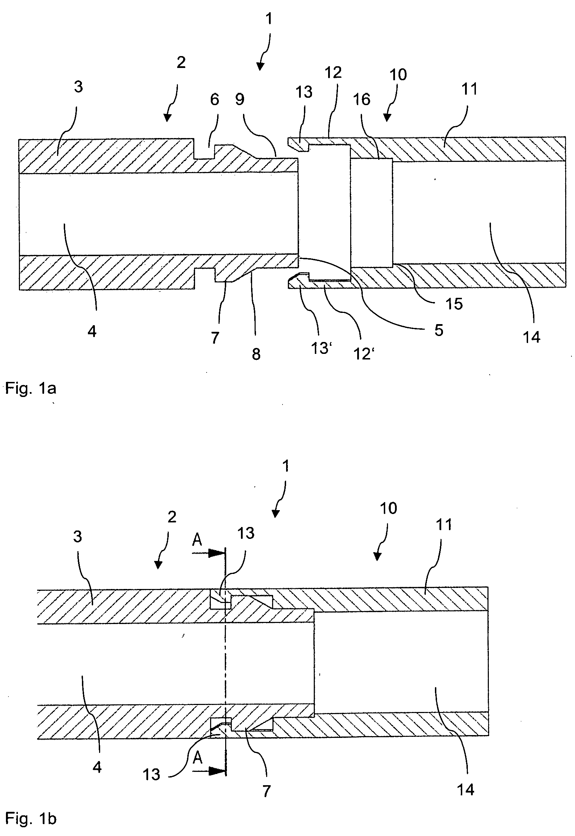

Gemäß dem in Fig. 1a in vereinfachter Darstellung gezeigten Ausführungsbeispiel umfasst eine erfindungsgemäße Kupplungsvorrichtung 1 einen Lichtanschluss 2 eines nicht dargcstellten Endoskops und eine Kupplung 10. Der Lichtanschluss 2 ist als im Wesentlichen zylindrischer Lichtanschlussstutzen 3 ausgebildet, in dessen Innenraum 4 ein nicht dargestellter Beleuchtungslichtleiter des Endoskops angeordnet ist, der eine beispielsweise mit einer endseitigen Fläche 5 des Lichtanschlussstutzens 3 bündige plane Endfläche aufweisen kann. Im Endbereich des Lichtanschlussstutzens 3 ist eine umlaufende Nut 6 ausgebildet, die durch einen umlaufenden Bund 7 abgeschlossen wird. Der Bund 7 weist auf der Seite der Nut 6 eine steile, beispielsweise zu einer Längsachse des Lichtanschlussstutzens 3 senkrecht stehende Wand auf, während der Bund 7 endseitig in eine Schräge 8 übergeht. Weiter endseitig trägt der Lichtanschlussstutzen 3 ein dreigängiges Außengewinde 9.

Die Kupplung 10 umfasst einen als im Wesentlichen zylindrische Hülse ausgebildeten Kupplungskörper 11, der in axialer Richtung in zwei federnde Zungen 12, 12' übergeht, die jeweils eine Rastkralle 13, 13' tragen. Im Innenraum 14 des Kupplungskörpers 11 ist eine nicht dargestellte Lichtleiterfassung aufgenommen, in der ein Endbereich des Lichtleiters eines Lichtkabels gefasst ist. Der Lichtleiter kann eine beispielsweise mit dem Absatz 15 abschließende plane Endfläche aufweisen. Im Endbereich trägt der Kupplungskörper 11 ein dreigängiges Innengewinde 16.

Die Kupplung 10 und der als Kupplungsgegenstück dienende Lichtanschluss 2 sind in Fig. 1a in nicht verbundenem Zustand dargestellt. Durch axiales Verschieben kann die Kupplung 10 an den Lichtanschluss 2 herangeführt werden. Durch weiteres axiales Verschieben unter einer Drehbewegung, d.h. durch eine Schraubbewegung, wird durch Verschrauhen des Innengewindes 16 mit dem Außengewinde 9 eine mechanische Verbindung zwischen dem Kopplungskörper 11 und dem Lichtanschlussstutzen 3 hergestellt. Dabei überwinden die Rastkralle 13, 13', die an ihrer gegen den Bund 7 stoßenden Seite angefast sein können, den Bund 7 über die Schräge 8. Durch die Federkraft der federnden Zungen 12, 12' rasten die Rastkrallen 13, 13' hinter dem Bund 7 ein und sichern dadurch die mechanische Verbindung der Kupplung 10 mit dem Lichtanschluss 2. Diese Situation ist in Fig. 1b dargestellt. Die planen Endflächen der Lichtleiter liegen in diesem Fall aneinander an oder nahezu aneinander an.

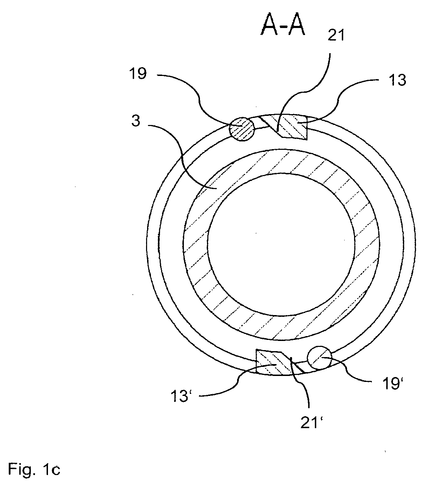

Außenseitig ist der Kupplungskörper 11 von einer Griffhülse umgeben, die in Fig. 1a bis 1c nicht dargestellt ist. Wie in Fig. 1c symbolisch als Querschnittsdarstellung in der in Fig. 1b angedeuteten Ebene A-A gezeigt ist, sind an der Innenseite der Griffhülse zwei axial gerichtete Bolzen 19, 19' angebracht, die bei einer Drehung der Griffhülse unter die Anlaufschrägen 21, 21' der Rastkrallen 13, 13' greifen und diese radial nach außen anheben. Sind die Rastkrallen 13, 13' aus dem Rasteingriff ausgehoben, so kann durch eine Schraubbewegung, die der zum Verbinden ausgeführten entgegengesetzt ist, die Kupplung 10 vom Lichtanschluss 2 gelöst werden. Die als Steuerflächen dienenden Anlaufschrägen 21, 21 können insbesondere als geneigte Ebenen ausgebildet sein. Die Rastkrallen 13, 13' und die Nut 6 bzw. der Bund 7 sind beispielsweise derart zueinander angeordnet, dass die Rastkrallen 13, 13' in Rasteingriff hinter den Bund 7 gelangen, wenn das Außengewinde 9 und das Innengewinde 16 nahezu vollständig oder auch erst teilweise miteinander in Eingriff stehen.

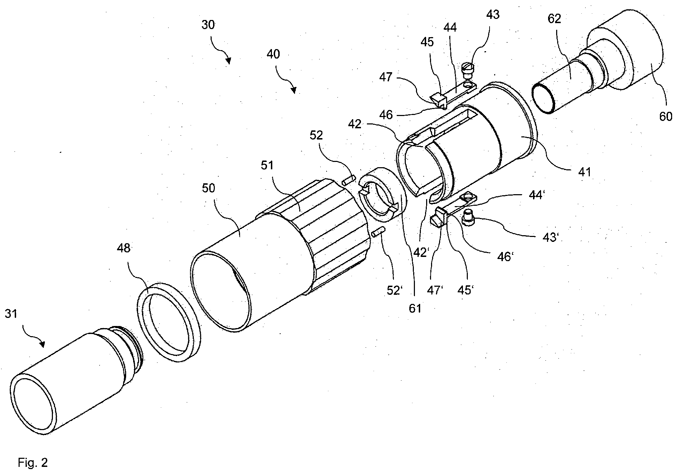

Gemäß Fig. 2 umfasst ein weiteres Ausführungsbeispiel einer erfindungsgemäßen Kupplungsvorrichtung 30 einen Lichtanschluss 31 eines nicht dargestellten Endoskops, der als Kupplungsgegenstück dient, und eine Kupplung 40 eines nicht dargestellten Lichtleitkabels. Die Kupplung 40 umfasst einen Kupplungskörper 41, der hülsenförmig ausgebildet und an seinem zum Lichtanschluss 31 gerichteten Ende mit zwei Schlitzen 42, 42' versehen ist In den Schlitzen 42, 42' sind mit Schrauben 43, 43' zwei federnde Zungen 44, 44' am Kupplungskörper 41 befestigt, die jeweils eine Rastkralle 45, 45' tragen. Jede Rastkralle 45, 45' weist in radialer Richtung einen Rastfortsatz 46, 46' und in Umfangsrichtung eine Anlaufschräge 47, 47' auf. Die Kupplung 40 umfasst femer eine Griffhülse 50, die außenseitig auf den Kupplungskörper 41 aufgesetzt ist. Die Griffhülse 50 weist auf ihrer Außenseite Griffrillen 51 auf. Innerhalb der Griffhülse sind axial gerichtete Bolzen 52, 52' gehalten. Auf den Kupplungskörper wird zum drehbaren Halten der Griffhülse 50 ein Schraubring 48 aufgeschraubt.

In den Kupplungskörper 41 ist eine Lichtleiterfassung 60 eingesetzt, die durch die Schlitzmutter 61 drehbar im Kupplungskörper 41 gehalten wird. Die Lichtleiterfassung 60 dient zum Fassen eines nicht dargestellten Lichtleiters, der bis zum lichtanschlussseitigen Ende der Lichtleiterfassung 60 in einem zylindrischen oder auch konischen Fortsatz 62 der Lichtleiterfassung geführt ist und dort eine plane Endfläche bildet. Innerhalb des Lichtanschlusses 31 können Lichtleitfasem bzw. ein Lichtleiter geführt sein und innerhalb des Lichtanschlusses 31 eine plane Endfläche bilden. Die Lichtleiter können insbesondere in die Lichtleiterfassung 60 bzw. in den Lichtanschluss 31 eingeklebt sein. Die Lichtleiterfassung 60 kann auf der dem Lichtanschluss 31 gegenüberliegenden Seite in einen Knickschutz eines Lichtleitkabels übergehen, innerhalb dessen der Lichtleiter verläuft; in der Lichtleiterfassung 60 kann auch ein Mantel bzw. ein Kabelschlauch des Lichtleitkabels gefasst sein (nicht dargestellt).

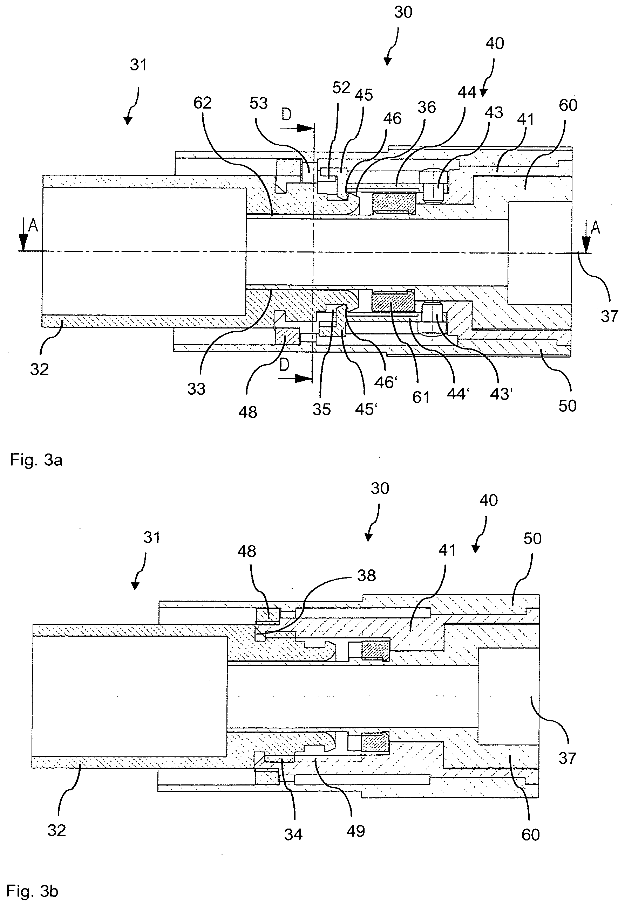

Fig. 3a zeigt einen Längsschnitt durch die in Fig. 2 gezeigte Kupplungsvorrichtung 30 im verbundenen Zustand in einer Ebene, die durch die Schlitze 42, 42' des Kupplungskörpers 41 verläuft; Fig. 3b zeigt einen Längsschnitt in einer hierzu senkrechten Ebene A-A, wie in Fig. 3a angedeutet ist.

Wie in Fig. 3a und 3b gezeigt ist, weist der Lichtanschluss 31 einen hülsenförmigen Lichtanschlussstutzen 32 auf, der an seinem kupplungsseitigen Ende innenseitig eine zylindrische Bohrung 33 ausbildet, die beim Verbinden der Kupplungsvorrichtung 30 zur Aufnahme und Führung eines zylindrischen Fortsatzes 62 der Lichtleiterfassung 60 dient. Zur Erleichterung des Einführens des Fortsatzes 62 in die Bohrung 33 kann die Bohrung gegenüber dem Fortsatz 62 mit Spiel ausgeführt sein; ferner kann das kupplungsseitige Ende der Bohrung 33 erweitert bzw. das Ende des Lichtanschlussstutzens 32 abgerundet sein. Der Lichtanschlussstutzen 32 weist ein in Fig. 3b angedeutetes, beispielsweise dreigängiges Außengewinde 34 auf. Ferner weist der Lichtanschlussstutzen 32 eine umlaufende Nut 35 bzw. einen umlaufenden Bund 36 auf.

Gemäß Fig. 3a trägt der Kupplungskörper 41 zwei federnde Zungen 44, 44', die mit dem Kupplungskörper mit Hilfe der Schrauben 43, 43' fest verbunden sind. Die federnden Zungen 44, 44' enden jeweils in einer Rastkralle 43, 43', die einen radial nach innen vorstehenden Rastfortsatz 46. 46' aufweist; ferner weisen die Rastkrallen 45, 45' in Umfangsrichtung Anlaufschrägen auf. In axialer Richtung sind die Rastfortsätze 46, 46' innenseitig einseitig angeschrägt. Der Bund 36 ist ebenfalls in axialer Richtung einseitig angeschrägt, wobei die Anschrägungen des Bunds 36 und der Rastfortsätze 46, 46' beim Verbinden der Kupplung 40 mit dem Lichtanschluss 31 zusammenwirken, um die Rastfortsätze 46, 46' gegen die Federkraft der federnden Zungen 44, 44' über den Bund 36 zu heben.

Wie in Fig. 3b gezeigt ist, weist der Kupplungskörper 41 ein durch die Schlitze 42, 42' (s. Fig. 2) unterbrochenes Innengewinde 49 auf, das zum Verbinden der Kupplung 40 mit dem Lichtanschluss 31 auf das Außengewinde 34 des Lichtanschlussstutzens 32 aufgeschraubt werden kann. Dabei kann der Kupplungskörper 41 gegen eine Anschlagfläche 38 des Lichtanschlussstutzens 32 festgezogen werden. Das Innengewinde 49 kann auch kürzer ausgeführt werden als in Fig. 3b dargestellt. Im verbundenen Zustand greifen die RastvorSprünge 46, 6' der Rastkrallen 45, 45' hinter den Bund 36 des Lichtanschlussstutzens 32 und sichern dadurch die Verbindung der Gewinde 34, 49 zusätzlich gegen unabsichtliches Lösen.

Außenseitig ist auf den Kupplungskörper 41 die Griffhülse 50 aufgesetzt und durch den Schraubring 48 drehbar auf dem Kupplungskörper 41 gehalten. An nach innen ragenden Fortsätzen 53, 53' der Griffhülse 50 sind axial gerichtete Bolzen 52, 52' gehalten. Die Fortsätze 53, 53' greifen in die Schlitze 42, 42' (s. Fig. 2) ein und begrenzen dadurch die Drehbewegung der Griffhülse 50 relativ zum Kupplungskörper 41, beispielsweise auf einen Bereich von ca. 10°.

Innerhalb des Kupplungskörpers 41 ist die Liehtleiterfassung 60 durch die Schlitzmutter 61 drehbar gehalten. Wie bereits zu Fig. 2 erläutert, ist die Lichtleiterfassung 60 hülsenförmig ausgebildet und dient zum Fassen des Lichtleiters sowie ggf. eines Mantels des Lichtleitkabels und kann beispielsweise in einen Knickschutz übergehen, der das Lichtleitkabel abschnittsweise umgibt (nicht dargestellt). Die Längsachse des Lichtleiters sowie der Lichtleiterfassung 60 und des Lichtanschlussstutzens 32 ist in Fig. 3a und 3b mit dem Bezugszeichen 37 bezeichnen.

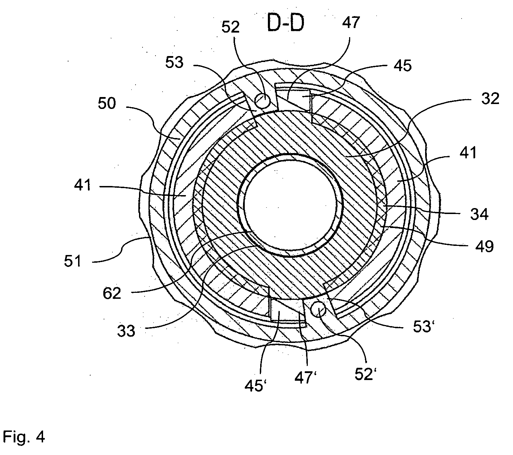

In Fig. 4 ist ein Querschnitt in der in Fig. 3a angedeuteten Ebene D-D dargestellt. Die Griffhülse 50, die außenseitig mit Griffrillen 51 versehen ist, trägt innenseitig an Fortsätzen 53, 53' axial gerichtete Bolzen 52, 52', die derart angeordnet sind, dass sie bei einer Drehung der Griffhülse 50 relativ zum Kupplungskörper 41 unter Anlaufschrägen 47,47' der Rastkrallen 45, 45' greifen und dadurch diese nach außen bewegen. In Fig. 4 ist ferner zu erkennen, dass der Kupplungskörper ein Innengewinde 34 trägt, das in Eingriff mit einem Außengewinde 49 des Lichtanschlussstutzens 32 steht Innerhalb der Bohrung 33 ist der Fortsatz 62 der Lichtleiterfassung 60 angeordnet.

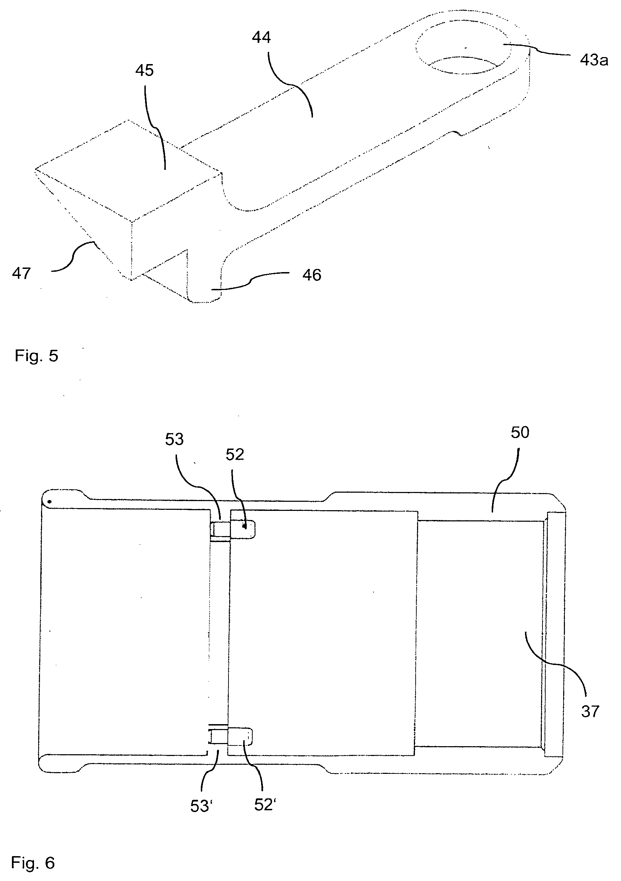

Fig. 5 zeigt in vergrößerter Darstellung eine Rastkralle 45, die von einer federnden Zunge 44 getragen wird. Die federnde Zunge 44 kann durch eine in die Bohrung 43a eingesetzte Schraube 43 an dem Kupplungskörper 41 befestigt werden (s. Fig. 2, 3a). Die Rastkralle 45 umfasst einen Rastfortsatz 46 zum Rasteingriff hinter einen Rastvorsprung und eine Anlaufschräge 47 zum Ausheben des Rastfortsatzes 46 aus dem Rasteingriff. Der Rastfortsatz 46 ist auf seiner Vorderseite zum Anheben beim Verbinden innenseitig angeschrägt, auf seiner Rückseite zum Halten des Rasteingriffs jeduch steil ausgebildet.

In Fig. 6 ist die Anordnung der Bolzen 52, 52', die als Steuernocken zum Ausheben der Rastkrallen aus dem Rasteingriff dienen, an der Griffhülse 50 dargestellt. Die nach innen ragenden Fortsätze 53, 53' der Griffhülse 50 weisen Bohrungen auf, in die die Bolzen 52, 52' in axialer Richtung eingesetzt sind. Die Bolzen 52, 52' können gehärtet sein, wie auch die Federn 44, 44' und die Rastkrallen 45, 45', während die übrigen Elemente der Kupplung 40 beispielsweise aus ungehärtetem Stahl hergestellt sein können.

Zum Verbinden der in Fig. 2 bis 6 dargestellten Kupplung 40 mit dem Lichtanschluss 31 werden die Kupplung 40 und der Lichtanschluss 31 in axialer Richtung aufeinander zu geführt, bis die Griffhülse 50 den Lichtanschlussstutzcn 32 umfasst und der Fortsatz 62 der Lichtleiterfassung 60 durch die Bohrung 33 des Lichtanschlussstutzens 32 geführt wird. Durch weiteres Einführen unter Ausführen einer Schraubbewegung werden die Gewinde 34, 49 miteinander in Eingriff gebracht und beispielsweise durch eine halbe Umdrehung festgezogen. Dabei gleiten die Rastkrallen 45, 45' über den als Rastvorsprung dienenden angefasten umlaufenden Bund 36 und gelangen in Rasteingriff mit der Nut 35 zur Sicherung der Schraubverbindung, wobei der Rasteingriff nach vollständigem oder auch bereits nach teilweisem Verbinden der Gewinde 34,49 erfolgen kann, etwa bereits nach einer Drehung um 90°. Die Drehbewegung kann allein durch Betätigung der Griffhülse 50 ausgeführt werden, da diese über die innenseitigen Fortsätze 53, die in die Schlitze 42, 42' eingreifen, auf den Kupplungskörper 41 übertragen wird. Durch die mechanische Verbindung der Kupplung 40 mit dem Lichtanschluss 31 werden die Endflächen der in der Lichtleiterfassung 60 bzw. im Lichtanschlussstutzen 32 gehaltenen Lichtleiter in Anlage miteinander oder in eine Gegenüberstellung gebracht, wobei ein Luftspalt von beispielsweise 0,2 bis 0,5 mm verbleiben kann.

Zum Lösen der Kupplung wird die Griffhülse 50 um die Längsachse 37 in Öffnungsrichtung der Gewinde 34,49 gedreht. Dabei heben die Bolzen 52, 52' nach einem kurzen Drehweg über die Anlaufschrägen 47, 47' die Rastkrallen 45, 45' aus dem Rasteingriff hinter dem als Rastvorsprung wirkenden Bund 36 aus. Die Drehbewegung der Griffhülse 50 relativ zum Kupplungskörper 41 ist durch die Bewegung der Fortsätze 53 innerhalb der Schlitze 42, 42' oder durch die Aushebebewegung der Rastkrallen 45, 45' auf einen Bereich von ca. 10° begrenzt. Wenn die Begrenzung der Drehbewegung der Griffhülse 50 relativ zum Kupplungskörper 41 erreicht ist, wird das Drehmoment von der Griffhülse 50 auf den Kupplungskörper 41 übertragen und beispielsweise durch eine halbe Umdrehung die Schraubverbindung der Gewinde 34, 49 gelöst. Danach können die Kupplung 40 und der Lichtanschluss 31 in axialer Richtung auseinander gezogen werden.

Zum Verbinden und zum Lösen der Verbindung reicht somit eine Betätigung der Griffhülse 50 in jeweils einer Richtung aus. Der Kupplungskörper 41 oder das Lichtleitkabel muss hierfür nicht ergriffen werden. Insbesondere kann die Griffhülse 50 den Kupplungskörper 41 praktisch vollständig umgeben. Hierdurch wird eine besonders einfache Handhabung ermöglicht.

### Bezugszeichenliste:

- 1: Kupplungsvorrichtung
- 2: Lichtanschluss
- 3: Lichtanschlussstutzen
- 4: Innenraum
- 5: Fläche
- 6: Nut
- 7: Bund
- 8: Schräge
- 9: Außengewinde
- 10: Kupplung
- 11: Kupplungskörper
- 12, 12': Federnde Zungen
- 13, 13': Rastkralle
- 14: Innenraum
- 15: Absatz
- 16: Innengewinde
- 19, 19': Bolzen
- 21, 21': Anlaufschräge
- 30: Kupplungsvorrichtung
- 31: Lichtanschluss
- 32: Lichtanschlussstutzen
- 33: Bohrung
- 34: Außengewinde
- 35: Nut
- 36: Bund
- 37: Längsachse
- 38: Anschlagfläche
- 40: Kupplung
- 41: Kupplungskörper
- 42, 42': Schlitz
- 43, 43': Schraube
- 43a: Bohrung
- 44, 44': Federnde Zunge
- 45, 45': Rastkralle
- 46, 46': Kastfortsatz
- 47, 47': Anlaufschräge
- 48: Schraubring
- 49: Innengewinde
- 50: Griffhülse
- 51: Griffhüllen
- 52, 52': Bolzen
- 53, 53': Fortsatz
- 60: Lichtleiterfassung
- 61: Schlitzmutter
- 62: Fortsatz

## Patentansprüche

1. Kupplung (10, 40) zum lösbaren Verbinden eines Lichtleiters mit einem Kupplungsgegenstück, mit einem Kupplungskörper (11,41), der mit einer Lichtleiterfassung (60) verbunden ist, einer Griffhülse (50), die den Kupplungskörper (11, 41) zumindest abschnittsweise umfangsseitig umgibt, und mindestens einer an dem Kupplungskörper (11, 41) radial federnd beweglich gehaltenen Rastkralle (13, 13', 45, 45') zum Rasteingriff hinter mindestens einen Rastvorsprung des Kupplungsgegenstücks, wobei die Griffhülse (50) auf dem Kupplungskörper (11, 41) drehbar gelagert ist, wobei durch eine Drehbewegung der Griffhülse (50) die mindestens eine Rastkralle (13, 13', 45, 45') aus dem Rasteingriff aushebbar ist, **dadurch gekennzeichnet, dass** der Kupplungskörper (11, 41) ein Gewinde (49) aufweist zum Verbinden mit einem Gewinde (34) des Kupplungsgegenstücks, wobei die Drehbewegung der Griffhülse (50) relativ zum Kupplungskörper (41) begrenzt ist.

2. Kupplung nach Anspruch 1, **dadurch gekennzeichnet, dass** die mindestens eine Rastkralle (13, 13', 45, 45') in Umfangsrichtung eine Anlaufschräge (21, 21', 47, 47') aufweist und dass die Griffhülse (50) mindestens einen Steuernocken aufweist, der bei der Drehbewegung der Griffhülse (50) mit der Anlaufschräge (21, 21', 47, 47') zum Ausheben der Rastkralle (13, 13', 45, 45') zusammenwirkt.

3. Kupplung nach dem vorhergehenden Anspruch, **dadurch gekennzeichnet, dass** eine Mehrzahl von Rastkrallen (13, 13', 45, 45') und Steuernocken vorhanden ist, insbesondere zwei Rastkrallen (13, 13', 45, 45') und zwei Steuernocken.

4. Kupplung nach einem der vorhergehenden Ansprüche, **dadurch gekennzeichnet, dass** die mindestens eine Rastkralle (13, 13', 45, 45') zum Anheben der Rastkralle (13, 13', 45, 45') bei einem Zusammenführen von Kupplung und Kupplungsgegenstück innenseitig angeschrägt ist.

5. Kupplung nach einem der vorhergehenden Ansprüche, **dadurch gekennzeichnet, dass** eine axiale Führung des Kupplungsgegenstücks vorgesehen ist.

6. Kupplung nach einem der vorhergehenden Ansprüche, **dadurch gekennzeichnet, dass** der Kupplungskörper (11, 41) mit der Lichtleiterfassung (60) drehbar verbunden ist.

7. Kupplungsvorrichtung (1, 30) umfassend eine Kupplung (10, 40) nach einem der vorhergehenden Ansprüche und ein Kupplungsgegenstück, wobei das Kupplungsgegenstück mindestens einen Rastvorsprung für einen Rasteingriff der mindestens einen Rastkralle (13, 13', 45, 45') aufweist.

8. Kupplungsvorrichtung nach dem vorhergehenden Anspruch, **dadurch gekennzeichnet, dass** der Rastvorsprung durch einen umlaufenden Bund (7, 36) eines in die Kupplung (10, 40) einführbaren Kupplungsstutzens gebildet wird.

9. Kupplungsvorrichtung nach Anspruch 7 oder 8, **dadurch gekennzeichnet, dass** die Kupplung (10, 40) als Teil eines Lichtleitkabels ausgebildet ist und dass das Kupplungsgegenstück als Lichtanschluss (31) eines Endoskops ausgebildet ist.

## Claims

1. Coupling (10, 40) for releasably connecting a light guide to a coupling counterpart, with a coupling body (11, 41) connected to a light guide holder (60), with a grip sleeve (50) which circumferentially surrounds the coupling body (11, 41) at least in parts, and with at least one locking claw (13, 13', 45, 45') that is held movably in a radially resilient manner on the coupling body (11, 41) for locking engagement behind at least one locking projection of the coupling counterpart, wherein the grip sleeve (50) is mounted rotatably on the coupling body (11, 41), wherein the at least one locking claw (13, 13', 45, 45') can be lifted out of the locking engagement by a rotary movement of the grip sleeve (50), **characterized in that** the coupling body (11, 41) has a thread (49) for connection to a thread (34) of the coupling counterpart, wherein the rotary movement of the grip sleeve (50) relative to the coupling body (41) is limited.

2. Coupling according to Claim 1, **characterized in that** the at least one locking claw (13, 13', 45, 45') has a start up slope (21, 21', 47, 47') in the circumferential direction, and **in that** the grip sleeve (50) has at least one control cam which, during the rotary movement of the grip sleeve (50), cooperates with the start up slope (21, 21', 47, 47') in order to lift out the locking claw (13, 13', 45, 45').

3. Coupling according to the preceding claim, **characterized in that** a plurality of locking claws (13, 13', 45, 45') and control cams are present, in particular two locking claws (13, 13', 45, 45') and two control cams.

4. Coupling according to one of the preceding claims, **characterized in that** the at least one locking claw (13, 13', 45, 45') is bevelled on the inside in order to lift the locking claw (13, 13', 45, 45') when coupling and coupling counterpart are brought together.

5. Coupling according to one of the preceding claims, **characterized in that** an axial guiding of the coupling counterpart is provided.

6. Coupling according to one of the preceding claims, **characterized in that** the coupling body (11, 41) is rotatably connected to the light guide holder (60).

7. Coupling device (1, 30) comprising a coupling (10, 40) according to one of the preceding claims and a coupling counterpart, wherein the coupling counterpart has at least one locking projection for locking engagement of the at least one locking claw (13, 13', 45, 45').

8. Coupling device according to the preceding claim, **characterized in that** the locking projection is formed by a circumferential flange (7, 36) of a coupling stub that is insertable into the coupling (10, 40).

9. Coupling device according to Claim 7 or 8, **characterized in that** the coupling (10, 40) is designed as part of a fibre optic cable, and **in that** the coupling counterpart is designed as a light connection (31) of an endoscope.

## Revendications

1. Raccord (10, 40) destiné à connecter de manière amovible un guide optique à une pièce complémentaire de raccord, comportant un corps de raccord (11, 41) qui est connecté à une monture de guide optique (60), un manchon de préhension (50) qui entoure de manière circonférentielle au moins par parties le corps de raccord (11, 41) et au moins une griffe d'encliquetage (13, 13', 45, 45') maintenue mobile radialement de manière élastique sur le corps de raccord (11, 41) pour une insertion par encliquetage à l'arrière d'au moins une protubérance d'encliquetage de la pièce complémentaire de raccord, dans lequel
le manchon de préhension (50) est monté de façon tournante sur le corps de raccord (11, 41), dans lequel l'au moins une griffe d'encliquetage (13, 13', 45, 45') peut être dégagée de l'état encliqueté par un mouvement de rotation du manchon de préhension (50), **caractérisé en ce que** le corps de raccord (11, 41) présente un filetage (49) permettant sa raccord à un filetage (34) de la pièce complémentaire de raccord, dans lequel le mouvement de rotation du manchon de préhension (50) par rapport au corps de raccordement (41) est limité.

2. Raccord selon la revendication 1, **caractérisé en ce que** l'au moins une griffe d'encliquetage (13, 13', 45, 45') présente dans la direction circonférentielle un biseau d'amorce (21, 21', 47, 47') et **en ce que** le manchon de préhension (50) présente au moins une came de commande qui coopère, lors du mouvement de rotation du manchon préhension (50), avec le biseau d'amorce (21, 21', 47, 47') afin de dégager le crochet d'encliquetage (13, 13', 45, 45').

3. Raccord selon la revendication précédente, **caractérisé en ce qu'**il est prévu une pluralité de griffes d'encliquetage (13, 13', 45, 45') et de cames de commande, notamment trois griffes d'encliquetage (13, 13', 45, 45') et deux cames de commande.

4. Raccord selon l'une quelconque des revendications précédentes, **caractérisé en ce que** l'au moins une griffe d'encliquetage (13, 13', 45, 45') est biseautée sur sa face interne pour soulever les griffes d'encliquetage (13, 13', 45, 45') lors d'un assemblage du raccord de la pièce complémentaire de raccord.

5. Raccord selon l'une quelconque des revendications précédentes, **caractérisé en ce qu'**il est prévu un guide axial pour la pièce complémentaire de raccord.

6. Raccord selon l'une quelconque des revendications précédentes, **caractérisé en ce que** le corps de raccord (11, 41) est connecté de manière tournante à la monture de guide optique (60).

7. Dispositif de raccordement (1, 30) comprenant un raccord (10, 40) selon l'une quelconque des revendications précédentes et une pièce complémentaire de raccord, dans lequel la pièce complémentaire de raccord présente au moins une protubérance d'encliquetage destinée à un encliquetage de l'au moins une griffe d'encliquetage (13, 13', 45, 45').

8. Dispositif de raccordement selon l'une quelconque des revendications précédentes, **caractérisé en ce que** la protubérance d'encliquetage est formée par une liaison circonférentielle (7, 36) d'un tube de raccordement pouvant être inséré dans le raccord (10, 40).

9. Dispositif de raccordement selon la revendication 7 ou 8, **caractérisé en ce que** le raccord (10, 40) est réalisé en tant que partie d'un câble de guide optique et **en ce que** la pièce complémentaire de raccord est réalisée sous la forme d'un raccord optique (31) d'un endoscope.
